# EUROPÄISCHE PATENTSCHRIFT

(11) **EP 2 158 978 B1**
(45) Veröffentlichungstag und Bekanntmachung des Hinweises auf die Patenterteilung: **16.05.2012**
(21) Anmeldenummer: 08015059.2
(22) Anmeldetag: 26.08.2008
(51) Int. Cl.: B09B 3/00, C10B 57/00, F23G 5/02, F23B 70/00

(54) **Verfahren zur Aufbereitung von Feststoffpartikeln**
Method for manufacturing solid particles
Procédé de préparation de particules de matière solide

(43) Veröffentlichungstag der Anmeldung: 03.03.2010
(73) Patentinhaber: Litesso-Anstalt, 9497 Triesenberg (LI)
(72) Erfinder: Kiss, Günter Hans, 28040 Lesa (IT)
(74) Vertreter: Pfenning, Meinig & Partner GbR

(56) Entgegenhaltungen:
- EP-A- 1 041 049
- WO-A-2004/085083
- US-A- 4 650 546
- US-A- 5 282 431

## Beschreibung

Das erfindungsgemäße Verfahren bezieht sich auf ein Verfahren zur Aufbereitung wie auch zum Recyceln von Schlamm, der in einem Sedimentbecken im Rahmen der Hochtemperaturbehandlung von Abfällen angefallen ist. Der Schlamm wird dazu getrocknet und mit vorportionierten festen Kunststoffen gemischt, so dass feste Konglomerate gebildet werden, die dann in die Hochtemperaturbehandlung des Abfalls zurückgeführt werden.

Eine Hochtemperaturbehandlung von Abfällen wird in den Patentschriften DE 41 30 416 C1, UA 41 263 C2 oder WO2004/085083 A1 näher erläutert. Hier wird ein Verfahren zur Entsorgung und Nutzbarmachung von Abfällen aller Art beschrieben, bei dem unsortierter, unbehandelter, beliebige Schadstoffe in fester wie auch flüssiger Form enthaltene Abfälle einer Temperaturbeaufschlagung unterzogen werden.

Die Abfälle werden unter Beibehaltung ihrer Misch-und Verbundstruktur zunächst komprimiert. Die entstandenen Kompaktpakete werden in einen von außen beheizbaren, länglichen Kanal gepresst, wobei sich ein gasdichter Pfropfen vor dem Kanaleingang bildet, der aufgrund seiner Gasundurchlässigkeit eine Schleusenfunktion übernimmt.

Die Kompaktpakete werden bei sich aufbauendem Gasdruck nur so lange in kraftschlüssigem Kontakt mit den heißen Kanalwandungen gehalten, bis die mitgeführten Flüssigkeiten und leicht flüchtigen Stoffe verdampft, bis vorhandene Rückstellkräfte einzelner Komponenten aufgehoben sind und bis die mitgeführten organischen Bestandteile zumindest teilweise Bindemittelfunktion übernommen haben. Es entstehen somit staubfreie, form- und strukturstabile, brockige Konglomerate, die anschließend in den Schacht eines Hochtemperaturreaktors fallen und eine gasdurchlässige, staubfreie Schüttung bilden.

Durch Zugabe von Sauerstoff werden die organischen Bestandteile des Abfalls im Reaktor vergast. Aufgrund der hierbei entstehenden Vergasungstemperatur von bis zu 2000°C werden in der Schmelzzone des Hochtemperaturreaktors unterhalb der Schüttung die anorganischen Bestandteile, wie Gläser, Metalle und sonstige Mineralien, aufgeschmolzen.

Die abgezogene Schmelze kennzeichnet sich bei unsortiert zugeführtem Abfallgut jedoch durch eine weitgehend inhomogene Struktur. Höherschmelzende Komponenten, beispielsweise Kohlenstoff, Ruß aber auch bestimmte Metalle, liegen noch in ihrem festen Aggregatzustand vor und bilden Einschlüsse, die eine sinnvolle Verwertung dieser schlackeartigen Restprodukte verhindern.

Die in schmelzflüssiger Form vorliegenden Restprodukte werden daher einer zusätzlichen Nachbehandlung unterworfen, indem sie einem thermischen Homogenisierungsprozess unterzogen werden. Hierbei wird die Schmelze in oxidierender Atmosphäre so lange geläutert, bis selbst Langzeiteluierbarkeit ausgeschlossen ist.

Der Hochtemperaturreaktor kennzeichnet sich dadurch, dass er über die Gesamtheit seines Volumens auf wenigstens 1000°C gehalten wird. Die gasförmigen und festen Abfallgüter bleiben so lange einer Hochtemperaturbeaufschlagung unterworfen, bis alle thermisch reagierbaren Schadstoffe sicher zerstört und langkettige Kohlenwasserstoffe gecrackt sind. Dadurch wird die Bildung von Kondensaten, wie Teer und Öl, zuverlässig verhindert.

Das über 1000°C heiße Gasgemisch, das aus Syntheserohgas und Wasserdampf besteht, wird unmittelbar nach Verlassen des Hochtemperaturreaktors durch Kaltwasserinjektion schockartig auf unter 100°C gekühlt. Die im Gasstrom mitgeführten Flüssigkeits- und Feststoffpartikel werden zusammen mit dem kondensierten Wasserdampf vom Kühlwasser aufgenommen.

Das oben beschriebene Vergasungsverfahren sieht vor, dass sich die Feststoffpartikel, wie Kohlenstoff, Ruß, Staub, elementare Metalle und Metallverbindungen, die aufgrund der hohen Vergasungstemperatur verdampfen, den Hochtemperaturreaktor über den Gasausgang verlassen und durch die Schockkühlung kondensieren, sowie mineralische Verbindungen, in einem Sedimentbecken absetzen. Sie werden anschließend ausgetragen, entwässert und als Dickschlamm am Übergang vom Entgasungskanal zum Hochtemperaturreaktor dem Vergasungsprozess wieder zugeführt.

Der plötzliche Kontakt des Schlamms mit der hohen Temperatur im Hochtemperaturreaktor von über 1000°C führt zu einer explosionsartigen Verdampfung des im Schlamm enthaltenen Wassers. Der Wasserdampf reißt die ursprünglich im Schlamm gebundenen Feststoffpartikel mit. Organische Feststoffpartikel, wie Kohlenstoff, Ruß und sonstige organische Müllbestandteile, werden zusammen mit den im Schlamm enthaltenen anorganischen Partikeln und den auf der Festbettschüttung vorhandenen, leichten Müllbestandteilen mit dem explosionsartig entstandenen Wasserdampf und dem im unteren Bereich des Hochtemperaturreaktors gebildeten Synthesegas teilweise mitgerissen und gelangen so über die Schockkühlung (Quench) erneut in das Sedimentbecken.

Eine Vergasung des im Schlamm enthaltenen Kohlenstoffs und/oder eine Einbindung der elementaren Metalle und Metallverbindungen in die anorganische Schmelze sind ausgeschlossen.

Das Verfahren des Standes der Technik führt somit dazu, dass der Schlamm immer wieder in den Vergasungsprozess zurückgeführt werden muss, was zwangsläufig dazu führt, dass die Schlamm-Menge zunimmt und die frei verfügbare Kapazität zur Vergasung von Abfällen entsprechend sinkt.

Um eine derartige weitere Kapazitätsreduzierung durch den Schlamm aus dem Sedimentbecken zu verhindern, wurde noch vorgeschlagen, mindestens einen Teil dieses Schlammes zu trocknen und separat zu entsorgen. Da dieser Schlamm im Wesentlichen aus Kohlenstoff und Ruß besteht, muss allerdings dieser Brennstoffverlust ausgeglichen werden.

Aufgabe der vorliegenden Erfindung ist es deshalb, ausgehend vom vorstehend beschriebenen Verfahren den Prozess so zu verbessern, dass eine wiederholte Rückführung des Schlammes entfällt und damit auch ein Brennstoffverlust ausgeglichen werden kann.

Diese Aufgabe wird durch das Verfahren mit den Merkmalen des Anspruchs 1 gelöst. Die Unteransprüche 2 bis 11 stellen vorteilhafte Weiterbildungen dieses Verfahrens dar.

Mit der vorliegenden Erfindung wird ein Verfahren vorgeschlagen, um den Schlamm des Sedimentbeckens als Brennstoff bei der Hochtemperaturvergasung sinnvoll einzusetzen. Mit diesem Verfahren wird die thermische Leistung des Vergasungsprozesses spürbar verbessert und die verfügbare Kapazität kann optimal zur Vergasung von Abfällen genutzt werden.

Erfindungsgemäß wird ein Verfahren zum Aufbereiten und/oder Recycling von in einem Sedimentbecken angefallenen Schlamm der aus Feststoffpartikeln in einer wässrigen Aufschlämmung besteht, bereitgestellt, wobei die Feststoffpartikel als Bestandteil des Rohsynthesegases durch Schockkühlung (Quench) des Rohsynthesegases, das bei einer Hochtemperaturbehandlung von Abfällen aller Art entstanden ist, vom Quenchwasser aufgenommen werden und sich als Schlamm im Sedimentbecken absetzen. Dieses Verfahren ist **dadurch gekennzeichnet**, dass der Schlamm aus dem Sedimentbecken entnommen, mindestens teilweise getrocknet und anschließend mit vorportionierten festen Kunststoffen vermischt wird, wobei ein Mischungsverhältnis des getrockneten Schlamms zu den vorportionierten festen Kunststoffen von 0,5 : 1,5 bis 1,5 : 0,5 eingehalten wird. Diese Mischung wird unter Einwirkung von Temperatur und Druck so lange behandelt, bis die Kunststoffe Bindemittelfunktion übernehmen und mit den Feststoffpartikeln des Schlamms feste Konglomerate bilden. Anschließend werden diese festen Konglomerate (Briketts) in die Hochtemperaturbehandlung des Abfalls zurückgeführt.

Es wird dabei bevorzugt ein Mischungsverhältnis von dem getrockneten Schlamm zu den vorportionierten, festen Kunststoffen von 0,8 : 1,2 bis 1,2 : 0,8, besonders bevorzugt von 1 : 1 eingehalten.

Die im Schlamm enthaltenen Feststoffpartikel sind Kohlenstoff, Ruß, mineralische Partikel, kondensierte Metalle, Metallverbindung und/oder weitere anorganische feste Partikel.

Es hat sich nun gezeigt, dass diese Feststoffpartikel sehr gut mit den vorportionierten Kunstoffen konglomeriert werden können, so dass eine Rückführung in den Vergasungsprozess ermöglicht wird.

Bevorzugt werden als feste vorportionierte Kunststoffe in dem erfindungsgemäßen Verfahren zerkleinerte Kunststoffabfälle eingesetzt.

Diese sind einfach zu portionieren und erleichtern somit die Handhabbarkeit deutlich.

Diese Kunststoffabfälle können in Form von Granulaten und/oder als Stückgut vorliegen. Weiterhin können als vorportionierte feste Kunststoffe geschnittene Fasern eingesetzt werden. Somit ist es möglich, in Abhängigkeit von den Schlammbestandteilen, den für die Umsetzung der Partikel am besten geeigneten Zerteilungsgrad des Kunststoffes auszuwählen. Dies verringert zusätzlich den Energieaufwand während der Umsetzung des Kunststoffs mit den Sedimenten, da die Kon-glomerat-Bildung bei einer möglichst großen Kontaktfläche schneller, einfacher und besser erfolgen kann.

Die Mischung der festen Kunststoffe mit dem getrockneten Schlamm wird in einer bevorzugten Variante des Verfahrens unter Druck und Temperatur in einem Extruder durchgeführt. Durch den Extruder wird unter Anderem durch Wärme und Druck eine gute Durchmischung der verschiedenen, eingesetzten Bestandteile ermöglicht. Weiterhin kann so das Material im Anschluss an den Mischvorgang in der bevorzugten Form für den weiteren Einsatz (z.B. als Faser, Kugel, Granulat etc.) extrudiert werden und muss nicht zeitaufwändig und unter Materialverlust von einer anderen Mischvorrichtung in den Extruder überführt werden.

Zur Trocknung des aus dem Sedimentbecken abgetrennten Schlamms kann vorteilhaft die Prozesswärme der Hochtemperaturbehandlung genutzt werden. Diese Maßnahme dient der Einsparung von Energie. Da es sinnvoll ist, dem Schlamm das Wasser zu entziehen, bevor er mit Kunststoffen umgesetzt wird, kann auf diese Weise die Wärme, die während der Hochtemperaturbehandlung freigesetzt wird, nutzbringend eingesetzt werden. So wird die durch den Verbrennungsprozess entstehende, andernfalls als Abwärme verloren gehende Energie, sinnvoll für das Verfahren verwendet.

Die Trocknung des aus dem Sedimentbecken abgetrennten Schlammes kann in einem Behältnis, vorzugsweise unter Vakuum, erfolgen. Dies dient der Beschleunigung des Trocknens und verhindert den Eintrag von unerwünschten Stoffen, die in anderen Gasumgebungen enthalten sein können, in das Konglomerat.

In einer bevorzugten Verfahrens-Variante wird für die Hochtemperaturbehandlung der Abfälle der Abfall unzerkleinert unter Mitführung vorhandener Flüssigkeitsanteile sowie Beibehaltung seiner Misch- und Verbundstruktur chargenweise zu Kompaktpaketen komprimiert und unter Aufrechterhaltung der Druckbeaufschlagung formschlüssig in einen auf über 100°C beheizten Kanal eingebracht. Dieses Verfahren entspricht dem Stand der Technik und ist vorstehend ausführlich erläutert worden (DE 41 30 416 C1 sowie UA 41 263 C2). Dabei wird das Kompaktgut schiebend in kraftschlüssigem Kontakt mit den Wandungen des Kanals gehalten und das anschließend aus dem Kanal ausgedrückte Feststoffkonglomerat in einen über sein gesamtes Volumen auf wenigsten 1000°C gehaltenen Hochtemperaturreaktor eingebracht. Zusätzlich wird kopfseitig das Rohsynthesegas entnommen und der Schockkühlung (Quench) zugeführt. An der Unterseite des Hochtemperaturreaktors werden die geschmolzenen Feststoffe ausgetragen und granuliert.

Gemäß einer bevorzugten Ausführungsform der Erfindung wird nun vorgeschlagen, die aus dem Schlamm gewonnenen festen Konglomerate (Briketts) in einen derartigen Hochtemperaturprozess zurückzuführen.

Die festen Konglomerate (Briketts) können dabei mit den Kompaktpaketen, die aus dem Müll gebildet werden, z.B. über einen Müllbunker in den beheizten Kanal eingebracht werden. So werden die Abfallprodukte, die im Rahmen des erfindungsgemäßen Verfahrens mit Kunststoffen umgesetzt wurden, für die erneute Vergasung nutzbar. Das Brikett gelangt dabei über den beheizbaren Entgasungskanal in den Vergasungsbereich des Hochtemperaturreaktors, in dem die organischen Bestandteile dieses Briketts mit Sauerstoff vergast werden. Die anorganischen Bestandteile werden aufgeschmolzen und gelangen in die anorganische Schmelze.

Zusammenfassend besitzt die Erfindung gegenüber dem Stand der Technik folgende Vorteile:
- Die im Müll enthaltenen organischen Bestandteile werden möglichst vollständig vergast, was zu einer höheren energetischen Effizienz führt.
- Der Einsatz des vorbehandelten Schlamms aus dem Sedimentbecken führt zu keiner Reduzierung der Entsorgungskapazität, weil die Feststoffpartikel dieses Schlamms möglichst vollständig vergast beziehungsweise aufgeschmolzen werden.
- Die externe Teilentsorgung des Schlamms aus dem Sedimentbecken entfällt.

## Patentansprüche

1. Verfahren zum Aufbereiten und/oder Recycling von in einem Sedimentbecken angefallenen Schlamm der aus Feststoffpartikeln in einer wässrigen Aufschlämmung besteht,
wobei der Schlamm durch Schockkühlung (Quench) aus einem Rohsynthesegas, das bei einer Hochtemperaturbehandlung von Abfällen aller Art entstanden ist, gebildet wird,
***dadurch gekennzeichnet, dass*** der Schlamm aus dem Sedimentbecken entnommen, mindestens teilweise getrocknet und anschließend mit vorportionierten festen Kunststoffen vermischt wird,
wobei ein Mischungsverhältnis des getrockneten Schlamms zu den vorportionierten festen Kunststoffen von 0,5 : 1,5 bis 1,5 : 0,5 eingehalten wird, dass diese Mischung unter Einwirkung von Temperatur und Druck so lange behandelt wird, bis die Kunststoffe Bindemittelfunktion übernommen und mit den Feststoffpartikeln des Schlamms feste Konglomerate bilden und dass anschließend diese festen Konglomerate in die Hochtemperaturbehandlung des Abfalls zurückgeführt werden.

2. Verfahren nach Anspruch 1,
***dadurch gekennzeichnet, dass*** ein Mischungsverhältnis von 0,8 : 1,2 bis 1,2 : 0,8, bevorzugt 1 : 1 eingehalten wird.

3. Verfahren nach Anspruch 1 oder 2,
***dadurch gekennzeichnet, dass*** die im Schlamm enthaltenen Feststoffpartikel Kohlenstoff, Ruß, mineralische Partikel, kondensierte Metalle, Metallverbindung und/oder weitere anorganische feste Partikel sind.

4. Verfahren nach mindestens einem der Ansprüche 1 bis 3,
***dadurch gekennzeichnet*, *dass*** als feste vorportionierte Kunststoffe zerkleinerte Kunststoffabfälle eingesetzt werden.

5. Verfahren nach Anspruch 4,
***dadurch gekennzeichnet, dass*** die Kunststoffabfälle in Form von Granulaten und/oder als Stückgut vorliegen.

6. Verfahren nach mindestens einem der Ansprüche 1 bis 3,
***dadurch gekennzeichnet, dass*** als vorportionierte feste Kunststoffe geschnittene Fasern eingesetzt werden.

7. Verfahren nach einem der Ansprüche 1 bis 6,
***dadurch gekennzeichnet, dass*** die Mischung der festen Kunststoffe mit dem getrockneten Schlamm unter Druck und Temperatur in einem Extruder durchgeführt wird.

8. Verfahren nach mindestens einem der Ansprüche 1 bis 7,
***dadurch gekennzeichnet, dass*** zur Trocknung des aus dem Sedimentbecken abgetrennten Schlamms die Prozesswärme der Hochtemperaturbehandlung genutzt wird.

9. Verfahren nach mindestens einem der Ansprüche 1 bis 8,
***dadurch gekennzeichnet, dass*** die Trocknung des aus dem Sedimentbecken abgetrennten Schlammes in einem Behältnis, vorzugsweise unter Vakuum, erfolgt.

10. Verfahren nach mindestens einem der Ansprüche 1 bis 9,
***dadurch gekennzeichnet*, *dass*** für die Hochtemperaturbehandlung der Abfälle der Abfall unzerkleinert unter Mitführung vorhandener Flüssigkeitsanteile sowie Beibehaltung seiner Misch- und Verbundstruktur chargenweise zu Kompaktpaketen komprimiert und unter Aufrechterhaltung der Druckbeaufschlagung formschlüssig in einen auf über 100 °C beheizten Kanal eingebracht wird,
dass das Kompaktgut schiebend in kraftschlüssigem Kontakt mit den Wandungen des Kanals gehalten wird und das anschließend aus dem Kanal ausgedrückte Feststoffkonglomerat in einen über sein gesamtes Volumen auf wenigsten 1000 °C gehaltenen Hochtemperaturreaktor eingebracht wird und
dass kopfseitig das Rohsynthesegas entnommen und der Schockkühlung (Quench) zugeführt wird und dass an der Unterseite des Hochtemperaturreaktors die geschmolzenen Feststoffe ausgetragen und granuliert werden.

11. Verfahren nach Anspruch 10,
***dadurch gekennzeichnet, dass*** die festen Konglomerate mit den Kompaktpaketen in den beheizten Kanal eingebracht werden.

## Claims

1. Method for processing and/or recycling sludge which has accumulated in a settling tank and comprises solid particles in an aqueous slurry,
the sludge being formed by shock-cooling (quenching) from a crude synthesis gas which is produced in a high temperature treatment of waste of all types,
***characterised in that***
the sludge is removed from the settling tank, dried at least partially and subsequently mixed with preportioned solid plastic materials,
a mixing ratio of the dried sludge to the preportioned solid plastic materials of 0.5 : 1.5 to 1.5 : 0.5 being maintained, **in that** this mixture is treated under the effect of temperature and pressure until the plastic materials adopt the binding agent function and form solid conglomerates with the solid particles of the sludge, and **in that** subsequently these solid conglomerates are returned to the high temperature treatment of the waste.

2. Method according to claim 1,
***characterised* in that**
a mixing ratio of 0.8 : 1.2 to 1.2 : 0.8, preferably 1 : 1, is maintained.

3. Method according to claim 1 or 2,
***characterised in that***
the solid particles contained in the sludge are carbon, carbon black, mineral particles, condensed metals, metal compound and/or further inorganic solid particles.

4. Method according to at least one of the claims 1 to 3,
**characterised in that**
comminuted plastic material waste is used as solid preportioned plastic materials.

5. Method according to claim 4,
***characterised in that***
the plastic material waste is present in the form of granulates and/or as lumpy material.

6. Method according to at least one of the claims 1 to 3,
***characterised in that***
fibres cut as preportioned solid plastic materials are used.

7. Method according to one of the claims 1 to 6,
***characterised in that***
the mixture of the solid plastic materials with the dried sludge is implemented in an extruder under pressure and temperature.

8. Method according to at least one of the claims 1 to 7,
***characterised in that***
the process heat of the high temperature treatment is used to dry the sludge separated from the settling tank.

9. Method according to at least one of the claims 1 to 8,
***characterised in that***
the drying of the sludge separated from the settling tank is effected in a container, preferably under vacuum.

10. Method according to at least one of the claims 1 to 9,
***characterised in that***,
for the high temperature treatment of the waste, the waste is compacted without comminution whilst entraining any liquid components present and also maintaining the mixture and composite structure thereof in batches to form compacted bales and, whilst maintaining the pressure impingement, is introduced in a form fit into a channel heated to above 100°C,
**in that** the compacted material, when sliding, is retained in frictional contact with the walls of the channel and the solid conglomerate pressed out of the channel subsequently is introduced into a high temperature reactor maintained at at least 1000°C over the entire volume thereof and
**in that** the crude synthesis gas is removed at the top and supplied to the shock-cooling (quenching) and
**in that**, at the lower side of the high temperature reactor, the molten solids are discharged and granulated.

11. Method according to claim 10,
***characterised in that***
the solid conglomerates are introduced into the heated channel with the compacted bales.

## Revendications

1. Procédé pour le traitement et/ou le recyclage d'une boue formée dans un bassin sédimentaire, cette boue se composant de particules solides dans une suspension aqueuse,
dans lequel la boue est formée par réfrigération-choc (Quench) à partir d'un gaz de synthèse brut, qui a été obtenu en traitant à haute température des déchets de toutes sortes,
**caractérisé en ce que**
la boue est extraite du bassin sédimentaire, au moins partiellement séchée, puis mélangée à des matériaux synthétiques solides préalablement réduits en portions,
dans lequel un rapport de mélange de la boue séchée aux matériaux synthétiques préalablement réduits en portions est maintenu dans la plage de 0,5:1,5 à 1,5:0,5, **en ce que** ce mélange est traité sous l'action de la température et de la pression le temps nécessaire pour que les matériaux synthétiques acquièrent une fonction de liant et forment, avec les particules solides de la boue, des agglomérats solides, et **en ce que** ces agglomérats solides sont ensuite recyclés vers le traitement à haute température du déchet.

2. Procédé selon la revendication 1,
**caractérisé en ce que**
un rapport de mélange est maintenu dans la plage de 0,8:1,2 à 1,2:0,8, de préférence de 1:1.

3. Procédé selon la revendication 1 ou 2,
**caractérisé en ce que**
les particules solides contenues dans la boue sont du carbone, de la suie, des particules minérales, des métaux condensés, un composé métallique et/ou d'autres particules inorganique solides.

4. Procédé selon au moins l'une quelconque des revendications 1 à 3,
**caractérisé en ce que**
l'on utilise, comme matériaux synthétiques solides préalablement réduits en portions, des déchets de matériaux synthétiques réduits en morceaux.

5. Procédé selon la revendication 4,
**caractérisé en ce que**
les déchets de matériaux synthétiques se présentent sous la forme de granulés et/ou de morceaux.

6. Procédé selon au moins l'une quelconque des revendications 1 à 3,
**caractérisé en ce que**
on utilise, comme matériaux synthétiques solides préalablement réduits en portions, des fibres coupées.

7. Procédé selon l'une quelconque des revendications 1 à 6,
**caractérisé en ce que**
le mélange des matériaux synthétiques solides et de la boue séchée est réalisé sous pression et à température dans une extrudeuse.

8. Procédé selon au moins l'une quelconque des revendications 1 à 7,
**caractérisé en ce que**
l'on utilise, pour le séchage de la boue extraite du bassin sédimentaire, la chaleur générée par le traitement à haute température.

9. Procédé selon au moins l'une quelconque des revendications 1 à 8,
**caractérisé en ce que**
le séchage de la boue extraite du bassin sédimentaire est effectué dans une cuve, de préférence sous vide.

10. Procédé selon au moins l'une quelconque des revendications 1 à 9,
**caractérisé en ce que**,
pour le traitement à haute température des déchets, le déchet non réduit en morceaux est comprimé par charges successives en paquets compacts, tout en entraînant conjointement des fractions de liquide présentes et en maintenant sa structure mixte et composite, et est introduit par adaptation de forme, tout en maintenant la sollicitation à la pression, dans un canal chauffé à plus de 100 °C,
**en ce que** l'objet compact est poussé pour être maintenu en contact par adhérence aux parois du canal et ensuite, l'agglomérat de solides expulsé du canal est introduit dans un réacteur à haute température maintenu à au moins 1000 °C dans l'intégralité de son volume, et
**en ce que**, côté tête, on élimine le gaz de synthèse brut et on le soumet à la réfrigération-choc (Quench), et **en ce que** sur la partie inférieure du réacteur à haute température, on extrait et on granule les solides fondus.

11. Procédé selon la revendication 10,
**caractérisé en ce que**
les agglomérats solides sont introduits avec les paquets compacts dans le canal chauffé.
